# EUROPEAN PATENT SPECIFICATION

(11) **EP 2 802 769 B1**
(45) Date of publication and mention of the grant of the patent: **15.03.2017**
(21) Application number: 13701227.4
(22) Date of filing: 11.01.2013
(51) Int. Cl.: F03D 1/06, F03D 7/02, F03D 80/70

(54) **WIND TURBINE ROTOR**
WINDTURBINENROTOR
ROTOR D'ÉOLIENNE

(30) Priority: 13.01.2012 EP 12151137
(43) Date of publication of application: 19.11.2014
(73) Proprietor: youWINenergy GmbH, 26135 Oldenburg (DE)
(72) Inventor: ROHDEN, Rolf, 26607 Aurich (DE)
(74) Representative: Alt, Michael
(86) International application number: PCT/EP2013/050525
(87) International publication number: WO 2013/104779

(56) References cited:
- WO-A1-2011/056121
- DE-A1-102008 037 605
- DE-A1-102008 037 609
- US-A1- 2010 086 409

## Description

### BACKGROUND

The present subject matter relates to a wind turbine rotor and a wind turbine comprising such a wind turbine rotor.

In a commonly known wind turbine, a plurality of blades is mounted to a hub which is connected to a generator system for generating electricity based on the rotational power caused by wind energy exerted on the blade. In the commonly known wind turbine installations, the hub is rotatably mounted with the axis being aligned substantially horizontally which installation is referred to as horizontal wind turbine. In such commonly known horizontal wind turbines, wind turbine rotors are employed in which a blade pitch angle can be adjusted so that a predetermined rotation speed is obtained in accordance with specific wind conditions.

In recent years, the length of wind turbine blades has increased in order to provide wind turbine installations with an output of as much as 1 MW(el) or more in a single turbine. Consequently, specific restrictions relating to the transportation of elements of such wind turbine installations are introduced. However, large wind turbine installations provide an increased output, an enhanced efficiency and, besides others, several economic improvements.

Conventional rotor systems employ rotatable supports for the blades in order to adjust the pitch of the blades to current wind conditions. As the complete blade is designed as rotatable element, this support is located close to the hub. For such a support, bearings are used which are adapted to transmit the bending torque of the blade to the hub. In commonly known arrangements, the bearing is formed as compact assembly for mounting this assembly in the designated space which is limited in such known arrangements.

DE 10 2008 037 605 A discloses a wind turbine comprising sectional blades; each blade comprises a hub extension portion connected to the hub and a rotatable external section. US 2010/0086409 A discloses a wind turbine having a hub comprising a plurality of radially extending ports, each having a pair of spaced apart annular bearings for receiving a respective wind turbine blade.

### SUMMARY

The present subject matter relates to a wind turbine rotor which provides the advantages of large-scale wind turbines while the restrictions regarding the transportation of the elements of such a wind turbine rotor are reduced.

Further, the present subject matter relates to an improved arrangement for adjusting the pitch of a blade mounted to the wind turbine rotor which is easily mountable and which provides an enhanced safety in particular in situations with high wind speeds.

According to the basic concept of the present subject matter, a wind turbine rotor comprises a hub and at least one blade which is connected to the hub. According to the subject matter, the blade comprises a first blade section and a second blade section. The first blade section is mounted to the hub stationary with respect to the hub, wherein the second blade section is supported by the first blade section rotatably adjustable about a longitudinal axis of the blade. The second blade section is supported by the first blade section by at least two bearings which are spaced with respect to the longitudinal axis of the blade.

The blades of the wind turbine rotor which are designed for a high specific rated output power comprise a predetermined length in the radial direction of the wind turbine rotor when mounted. Consequently, reducing the total length of such a blade is not reasonable as the rated output power of such a wind turbine installation is reduced at the same time.

That is, the total length of the blade of the wind turbine rotor according to the subject matter is determined by sum of the length of the first blade section which is mounted to the hub and the length of the second blade section which is supported by the first blade section. Consequently, the second blade section is shorter than the total length of the entire blade such that the second blade section can be easily transported on the road or railway. The support of the second blade section by the first blade section using at least two bearings which are spaced with respect to the longitudinal axis of the blade enhances the stability of the rotatable support while simplifying the design of the bearings and related elements, such as bearing mounts.

According to an embodiment of the present subject matter, the first blade section extends substantially in the radial direction of the wind turbine rotor and the second blade section forms an extension at the radial end of the first blade section and substantially extends in the radial direction of the wind turbine rotor. Based on such an arrangement, a blade with a total length can be provided which meets the predetermined conditions of the wind turbine installation design.

According to yet another embodiment of the present subject matter, the first blade section forms a cover and/or mount for a support structure rotatably supporting the second blade section. A rotatable support for the second blade section enables a pitch control in order to adapt the operational conditions of the wind turbine rotor to the current wind conditions which are subject to fluctuations. According to the concept of the present subject matter, the first blade section is not rotatable, while the second blade section which is rotatably supported by the first blade section can be rotated for adjusting a pitch of at least a part of the entire blade.

According to yet another embodiment of the present subject matter, the support structure comprises a shaft mounted to a radial inner end of the second blade section and said at least two bearings rotatably supporting the shaft. According to the concept of the present subject matter, the shaft supports the second blade section which is mounted in said at least two bearings. According to the present subject matter, said at least two bearings provides a support of the shaft at locations which are spaced in the radial direction of said wind turbine rotor, in particular, in the axial direction of said shaft. The shaft can be manufactured in a simple way and can be held by said at least two bearings in order to provide a sufficient stability providing the capability of transferring a moment to the hub to be converted into the rotation of the hub.

According to yet another embodiment of the present subject matter, one of said at least two bearings is arranged at or close to the radially outer end of the first blade section and the other of said at least two bearings is arranged at or close to the radially inner end of the first blade section.

According to yet another embodiment of the present subject matter, each of said at least two bearings is mounted in a bearing mount. Specific bearing mounts can be adapted to the predetermined shape or construction of the bearings which are employed for supporting the shaft.

According to yet another embodiment of the present subject matter, each of the bearing mounts is formed as plate member or at least partly as plate member with its surface forming the main surface being arranged substantially perpendicular with respect to the radial direction of the wind turbine rotor, wherein each of the bearing mounts is provided with at least one manhole for maintenance and/or installation works. Due to the fact that the support structure includes elements which are subject to maintenance, the arrangement employing plate members as bearing mounts and providing at least one manhole in each plate member enables required maintenance work to be performed in the area of the first blade section, in particular, inside the first blade section, which includes multiple mechanical arrangements. Further, the installation of the wind turbine rotor is simplified by providing such manholes for transporting the elements of the rotor inside the first blade section through the manholes.

According to yet another embodiment of the present subject matter, the first blade section is formed as hollow member which is fixedly connected to the hub and encloses the support structure inside said hollow member such that said support structure is arranged outside the hub. Such an arrangement enables a simplified construction of the hub due to the fact that the forces acting from the second blade section are applied to locations which are positioned further outside the hub. That is, the forces are applied to the first blade section which includes the support structure for the second blade section. Stresses created by such an arrangement can be decreased in relation to a structure in which the support structure is provided inside or close to the hub.

According to yet another embodiment of the present subject matter, an actuating device is provided at least partly in the first blade section which is configured to rotate the second blade section about the longitudinal axis of the blade. Such an actuating device enables the pitch control of the second blade section and the specific arrangement in the first blade section simplifies the construction and the maintenance work.

According to yet another embodiment of the present subject matter, the actuating device is formed as at least one electric motor which is capable of rotating the shaft. An electric motor is easily controllable and can be designed with a small dimension which is important due to the limited space inside the rotor structure.

According to yet another embodiment of the present subject matter, the at least one motor is provided with a drive gear which is engaged or engageable with a gear section provided on the shaft. A geared transmission is simple and accurate for controlling the pitch of the blade. Further, the maintenance of such a system is simple and economic.

According to yet another embodiment of the present subject matter, the at least one motor is directly coupled to the shaft thus forming a direct drive of the shaft, in particular, without any speed reduction between the motor and the shaft. Such an arrangement is even more simplified as a transmission structure is not required which enhances the service life of the entire system. Further, the at least one motor can be mounted at the axial end of the shaft or even inside the shaft.

According to yet another embodiment of the present subject matter, the at least one electric motor is formed as synchronous motor which is controllable by a frequency converter. Such a system further enhances the controllability of the pitch of the second blade section. This system can be further enhanced by using a positional sensor for providing a signal indicating the rotational position of the shaft or of the second blade section. However, such a sensor is not essential for the subject matter.

According to yet another embodiment of the present subject matter, the second blade section is rotatably adjustable to an operational pitch position between a maximum pitch position and a minimum pitch position. Consequently, the second blade section can be operated to the desired rotational position in order to meet the requirements taking into account current wind conditions besides others.

According to yet another embodiment of the present subject matter, the outer surface of the first blade section is formed with an aerodynamic shape arranged for applying a torque to the hub when a wind force or wind load is exerted to the first blade section from the axial direction the wind turbine rotor, and the outer surface of the second blade section is formed with an aerodynamic shape arranged for applying a torque to the hub via the first blade section when a wind force or wind load is exerted to the second blade section approximately in the axial direction of the wind turbine rotor and the second blade section is rotatably adjusted to the operational pitch position.

According to this yet another embodiment, the surface of the first blade section contributes to the generation of a torque in the hub based on the specific aerodynamic shape, in particular, when the axis of the rotor is aligned with the wind direction. In addition, the outer surface of the second blade section also contributes to the generation of the torque due to the specific aerodynamic shape. Other than the first blade section, the pitch of the second blade section can be adjusted. As consequence, the effect of generating a torque which is applied to the hub can be adjusted by adjusting the rotational position of the second blade section, whereas the pitch of the first blade section is constant at all times.

A specific effect of this arrangement is remarkable in conditions with high wind speeds or in cases where the wind turbine rotor is to be inhibited from rotating. When the pitch of the second blade section is maximized, the pitch of the first blade section is still the same, i.e. the operational pitch. As consequence, irrespective of the direction from which the wind flows towards the turbine in relation to the axis of the rotor, the torque applied to the hub is reduced or minimized due to the fact that the torques applied to the hub from the first blade section and the second blade section, respectively, will never reach the maximum or operational torque at the same time. That is, at least one of the torque of the first blade section and of the torque of the second blade section is less than the maximum possible torque in case that the second blade section is rotated to the maximum pitch position.

According to yet another embodiment of the present subject matter, the outer surface or appearance of the blade which is formed by the outer surface of the first blade section and the outer surface of the second blade section forms a continuous surface or appearance at least in a predetermined pitch position of the second blade section. Preferably, this predetermined pitch position is the operational pitch position with the optimum torque output taking into account the rated output at the rated wind speed.

That is, the design of the outer surface of the entire blade formed by the first blade section and the second blade section is such that a continuous outer surface is formed in an operational pitch position of the second section which is the position under normal conditions of operation of the wind turbine installation. That is, the outer appearance of the entire blade and the aerodynamics thereof are optimized to the operational conditions and do not differ remarkably from outer appearances commonly known from aerodynamically optimized blades which are manufactured as a single part.

According to yet another embodiment of the present subject matter, the torque applied to the hub by the blade is minimized by adjusting the pitch position of the second blade section to the maximum pitch position. As stated above, the pitch position of the first blade section is constant at all times whereas the pitch position of the second blade section can be adjusted. In case that the pitch position of the second blade section is adjusted to the maximum pitch position, the pitch position of the first blade section remains at the operational pitch position. Consequently, the system with such a wind turbine rotor can perform a safety or fail safe operation in which the wind turbine rotor can be stopped even under conditions with high wind speeds.

According to yet another embodiment of the present subject matter, at least one support base is provided at the outer circumferential surface of the hub for supporting the first blade section, wherein said support base comprises a mounting surface which faces at least partly to the radial outward direction and which is tangential to at least a part of the outer periphery of said hub or parallel to a tangent of the outer periphery of said hub. The support base at the outer circumference of the hub can be adapted to the mounting properties of the first blade section such that the mounting work of the first blade section can be simplified and the strength of such an arrangement is improved.

According to yet another embodiment of the present subject matter, the mounting surface of the support base is arranged with an outer contour which is adapted to an outer contour of the first blade section at the transition between said support base and the first blade section. The adaptation of the contours of the first blade section and of the support base improves the mounting and in particular enables an optimized coupling or attachment such as an attachment based on welding or the like. However, any other couplings or attachments are possible and not restricted to welding and even a detachable mounting structure is possible.

According to yet another embodiment of the present subject matter, the length of the first blade section in the radial direction of said wind turbine rotor is a fraction of the length of the second blade section in the radial direction of said wind turbine rotor, preferably 5-50 %, more preferably 5-25 % and most preferably 10-25 % of the length of said second blade section. The above ranges provide the effect of reducing the transport efforts and, at the same time, the optimized operation of the wind turbine rotor according to the subject matter. The above ranges represent preferable ranges, but other arrangements are within the scope of the present subject matter as long as the effects are achieved, that is, as long as the improved mounting of the rotatable second blade section is possible and the above discussed fail safe operation is remarkable. In particular, the above proportion is selected for optimizing the balance between pitch control and structural rigidity of the entire wind turbine rotor.

Optionally, the support base protrudes from the outer circumferential surface of the hub. As the first blade section is formed as hollow member to be mounted to the hub as stationary member in relation to the hub the support base enhances the transfer of forces and moments, i.e. bending moments, to the hub such that the entire arrangement can be reduced in mass. The first blade section can be fixedly mounted to the support base or can be detachably mountable to the support base in order to reduce the dimensions of the hub with the first blade section for transportation. In any case, an optimization is desired between transportation issue and reduction of mass of the first blade section and the hub.

According to yet another embodiment of the present subject matter, a wind turbine is provided which comprises a housing, a generator, which is accommodated in said housing and a wind turbine rotor according to the above presented basic concept of the subject matter, which is optionally further developed by one or more of the above discussed embodiments, wherein the hub of the wind turbine rotor is drivingly connected to the generator. The wind turbine comprising the above mentioned concept of the present subject matter exhibits the same advantageous effects as indicated above.

### BRIEF DESCRIPTION OF THE DRAWINGS

Figure 1 shows an embodiment of the wind turbine rotor in a side view in a partially cut away condition as schematic drawing.
Figure 2 shows the wind turbine rotor of Figure 1 in a three dimensional schematic view.
Figure 3 shows the wind turbine rotor of Figure 1 in a further three dimensional schematic view.
Figure 4 shows a schematic view of the wind turbine rotor of Figure 1 in a in a condition where there second blade sections are positioned at the maximum pitch position..

In the following, embodiments of the present subject matter are explained based on the drawings. It is noted that the drawings show a specific embodiment as explained below and further alternative modifications as specified in the description are at least in part not illustrated.

### DESCRIPTION OF THE EMBODIMENTS

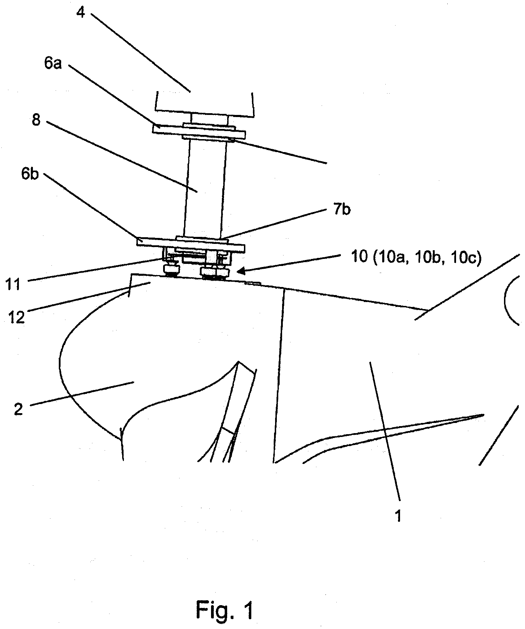

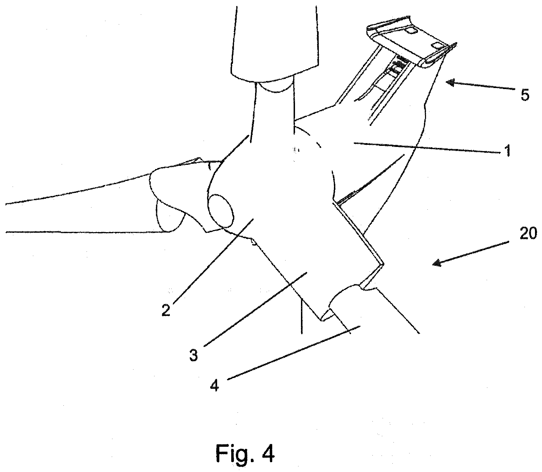

Figure 1 shows the wind turbine rotor of the present subject matter and details thereof. In order to understand the advantages and function of this wind turbine rotor, the general function thereof is explained based on Figure 4 showing the wind turbine rotor according to an embodiment in a mounted condition. The wind turbine rotor comprises a hub 2 which is rotatably supported on a nacelle 1. The hub 2 is rotatable such that a rotating axis of the hub 2 is substantially horizontally aligned. The rotational axis can be slightly inclined such that the direction of the extension of the rotational axis opposite to the wind direction is slightly tilted upwards. Such a deviation shall be considered as being covered by the meaning of the horizontal alignment of the axis. Further, the front side of the hub 2 faces against the wind such that the wind stream is directed towards the hub 2. The hub 2 is formed with a specific aerodynamic shape for reducing disturbances by the wind stream passing by the surface of the hub 2. The outer surface of the hub 2 and the outer surface of the nacelle 1 are formed substantially as continuous surface in order to avoid further disturbances at the transition between the hub 2 and the nacelle 1.

The nacelle 1 shown in Figure 4 is provided with a top section 5 which includes equipment such as cooling system and position lights. However, the top section 5 as shown in Figure 4 is not essential for the present embodiment and rather forms an advantageous development thereof as discussed below.

Furthermore, the nacelle 1 is supported on a tower which is not shown in the drawings. The nacelle 1 is rotatably supported such that the horizontally directed axis of the hub 2 can be positioned in an optimum relation to the wind direction.

Figure 1 shows the wind turbine rotor in a side view when mounted to the nacelle 1. The hub 2 comprises a support base 12 which is formed in the outer surface of the hub 2. The support base 12 according to the present embodiment forms at least partially a plane for supporting at least a part of a blade.

Referring back to Figure 4, the blade 20 comprises a first blade section 3 and a second blade section 4. Consequently, the first blade section 3 and the second blade section 4 form the complete blade 20 in the present embodiment. As shown in the drawings, the wind turbine rotor according to the present embodiment comprises three blades 20 which are mounted to the hub 2 at equal angular distances. However, it is possible to provide the rotor with a different number of blades 20. Consequently, a single blade, two blades or more than three blades are possible. Thus, the number of three blades is not essential for the present subject matter. In case that only one blade 20 is mounted to the hub 2, a counter balance must be designed and arranged at the hub 2 in order to enable a proper operation of the wind turbine rotor.

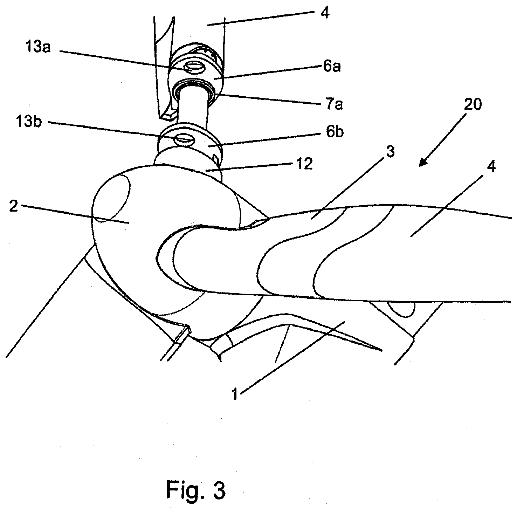

As shown in Figure 4, the first blade section 3 is arranged at the outer circumference of the hub 2. In the present embodiment, the first blade section 3 is mounted to the support base 12 which is shown in Figures 1-3. The support base 12 is, as already discussed, formed in the outer circumference of the hub 2 and comprises a mounting surface 14 which is basically a plane. The outer contour of the support base 12 is adapted to the outer contour to the first blade section 3. In the present embodiment, the first blade section 3 is a hollow member which is arranged at the support base 12 and welded to the mounting surface 14 which faces in the radial direction of the hub 2. However, any other coupling arrangement can be selected as long as the first blade section 3 is fixedly mounted to the hub 2. Even a detachable arrangement is possible.

The first blade section 3 basically extends in the radial direction of the hub 2. As shown in Figure 4, the second blade section 4 forms an extension of the first blade section 3 in the radial direction.

According to the basic concept of the present subject matter, the first blade section 3 is not rotatably mounted to the hub 2 and as such stationary mounted with respect to the hub 2. The second blade section 4 is rotatably mounted such that the rotational position of the second blade section 4 with respect to the longitudinal direction of the blade 20 can be changed. The torque generated by specific longitudinal portions of the blade depends on the distance of the respective portion from the rotational axis of the hub. That is, the radially outer portions of the blade contribute to a higher extent to the torque generation than the radially inner portions. Therefore, the incorrect adjustment of the pitch of the first blade section has less influence than any incorrect influence of the pitch of the second blade section. Therefore, it is important to provide the second blade section with rotatable properties and the disadvantages of the non-adjustable property of the first blade section are still acceptable.

In the following, the mechanism for supporting the second blade section 4 and for adjusting the rotational position thereof is discussed. In the illustration of Figure 1, the hollow member forming the first blade section 3 is eliminated such that the support structure for the second blade section 4 is visible.

The support structure comprises a shaft 8 which is supported by bearings 7a, 7b. Each of the bearings 7a, 7b is supported by one of bearing mounts 6a, 6b.

Specifically, the bearings 7a, 7b are formed as roller bearings with an inner ring and an outer ring. The bearings 7a, 7b are arranged with the inner ring at the outer circumference of the shaft 8. The outer ring of each of the bearings 7a, 7b is supported on inner circumferential surfaces formed in the bearing mounts 6a, 6b. The bearings 7a, 7b are preferably mounted in a manner that
the axial displacement thereof is inhibited.

The bearing mounts 6a, 6b according to the present embodiment are formed as plate members or at least partly plate shaped members with the support holes for supporting the outer rings of the bearings 7a, 7b. The bearing mounts 6a, 6b which are formed as plate members are arranged such that the main surfaces thereof are approximately perpendicular to the axial direction of the shaft 8.

The bearing mounts 6a, 6b are formed with an outer contour which is adapted to the inner contour of the first blade section 3. The first blade section 3 is provided as the above discussed hollow member which is arranged on the outer peripheral surfaces of the bearing mounts 6a, 6b. Consequently, the bearing mounts 6a, 6b are supported inside the first blade section 3 and the first blade section 3 is supported on the support base 12 which is part of hub 2.

According to the basic concept of the present subject matter, the first blade section 3 includes the support structure for the second blade section 4. The support structure is based on the shaft 8 which is rotatably supported by the bearings 7a, 7b. The bearing 7a, 7b are positioned in a spaced relationship with respect to the axial direction of the shaft 8. Consequently, the shaft 8 can be rotated while forces acting on the shaft 8, such as bending moments, can be supported by the bearings 7a, 7b and the bearing mounts 6a, 6b, which forces are transferred via the first blade section 3 to the support base 12 and eventually to the hub 2.

The second blade section 4 is mounted at the radial outer end of the shaft 8. This arrangement can be achieved by screwing with the use of bolts in the shaft 8 and the second blade section 4 using flanges or other equivalent means, such as forming connections in composite structures of the second blade section 4. Consequently, the outer end of the shaft 8 provides a rotatable support for the second blade section 4. That is, based on the rotation of the shaft 8, the second blade section 4 can be adjusted with respect to its rotational position about the longitudinal axis of the blade 20 or an axis which is approximately aligned with the longitudinal direction of the blade 20.

As shown in Figure 1, at the radial inner end of the shaft 8, a geared portion 11 is provided which is fixedly mounted to the shaft 8. Further, an actuating device 10 is provided for actuating the shaft 8 in the rotational direction. According to the present embodiment which is shown in Figures 1-4, the actuating device 10 is formed with three electric motors 10a, 10b, 10c, wherein each of the electric motors 10a, 10b, 10c comprises a drive gear which is in engagement with the geared portion 11. Consequently, the electric motors 10a, 10b, 10c can rotate the shaft 8 with respect to the hub 2 which forms, at the same time, the support for the electric motors 10a, 10b, 10c.

Referring back to Figure 4, the first blade section 3 is formed with an aerodynamic shape which is adapted for generating a torque based on the wind force which is applied thereto from the axial direction of the hub 2. The second blade section 4 is formed with an aerodynamic shape having a similar effect, that is, an effect for applying a torque to the hub 2 based on the wind force which is applied to the second blade section 4 from the axial direction of the hub 2. The torque which is applied to the hub 2 can be adjusted by twisting the second blade section 4, that is, the pitch thereof. The present embodiment provides a wind turbine rotor in which the second blade section 4 can be adjusted in the rotational position in order to optimize the output of the wind turbine. The rotation of the second blade section 4 is performed based on the actuating device 10 in cooperation with the specific support structure which is arranged in the first blade section 3.

In a specific condition, the design rotational speed of the wind turbine rotor is achieved by a specific operation pitch position of the second blade section 4. In the specific operational pitch position of the second blade section 4, the outer appearance, that is, the outer surface of the complete blade 20 which is formed by the first blade section 3 and the second blade section 4 is continuous in order to optimize the aerodynamic properties of the complete wind turbine rotor. In order to adapt the aerodynamic action of the blade 20, the second blade section 4 can be adjusted in order to optimize the output torque taking into account the design rotational speed of the wind turbine besides other conditions.

Based on the design of the first blade section 3 and the second blade section 4 which form at least in the operational condition of the wind turbine rotor a substantially continuous surface, disturbances at the transition between the first blade section 3 and the second blade section 4 can be reduced to a minimum.

In cases where the wind turbine rotor shall be inhibited from rotating, it is required to reduce the torque applied from the blades 20 to the hub 2 to a minimum. In such cases, the pitch of the second blade section 4 can be maximized such that the rotational position of the second blade section 4 is approximately at 90° with respect to the operational pitch position or at least a pitch position which is remarkably larger that the operational pitch position.

In this case, the torque applied from the blade 20 is reduced due to the fact that irrespective of the direction of the wind stream towards the turbine, either the torque of the first blade section 3 or the torque of the second blade section 4 is reduced, such that the overall torque generated by the blade 20 is very low such that the wind turbine rotor can be stopped. Such an action is very important for cases with high wind speeds in order to increase the safety of fail safe operation of the system.

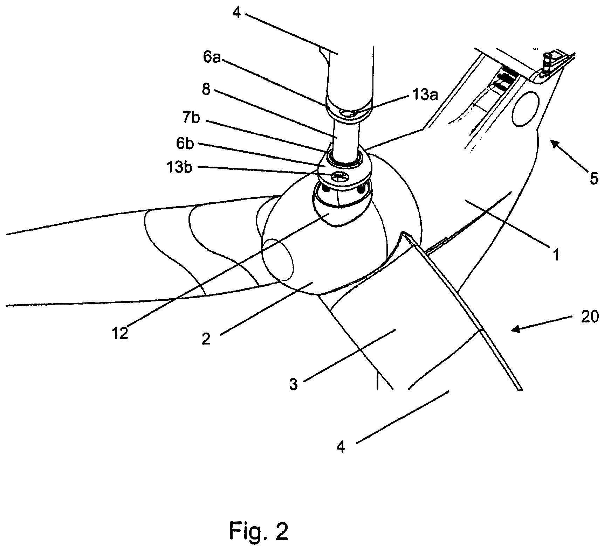

As shown in Figure 2, the bearing mounts 6a, 6b comprise manholes 13a, 13b which are used for maintenance and/or installation work. In the support structure of the present embodiment, several elements are provided which are subject to maintenance. Such a maintenance can be simplified by the arrangement of a hollow member forming the first blade section 3 and the bearing mounts 6a, 6b comprising such manholes 13a, 13b. Equivalent manholes can be provided in the support base 12 such that access is provided from the inner space of the hub 2 towards the support structure inside the first blade section 3.

In the above discussed embodiment, three motors 10a, 10b, 10c are provided. As alternative embodiment, a single motor 10 can be provided which can be formed as direct drive actuating device. As specific advantageous arrangement, the electric motor 10 can be mounted coaxially with respect to the shaft 8. As further advantage, such a direct drive electric motor 10 can be mounted inside the shaft 8 which can be formed as hollow member.

In the above embodiment, an actuating device is shown which is formed as three motors 10a, 10b, 10c which are in engagement with a geared section 11 mounted on the shaft 8. However, the present subject matter can be realized by any other actuating mechanism, such as a single motor 10, as explained above, or even other actuating mechanisms based on hydraulic, pneumatic or other mechanic or electric systems.

In the above embodiment, two bearings 7a, 7b are shown. However, it is possible to use more than two bearings for rotatably supporting the second blade section 4 with respect to the first blade section 3. That is, the number and the type of the bearings 7a, 7b are not essential for the subject matter as long as at least two bearings 7a, 7b are provided which are spaced in the radial direction of the blade 20 which arrangement contributes to the specific solution of the present subject matter. The spaced arrangement of the bearings in the context of the present subject matter is not limited to a specific distance between the at least two bearings. However, it is advantageous to provide the at least two bearings with a spaced arrangement which is adapted to the design of the first blade section 3. Due to the fact that the inner space in the first blade section 3 is employed for covering the support structure comprising the at least two bearings, the distance between the at least two bearing can be adapted to the available space depending on the design of the first blade section 3. It is clear that the maximum effect of the spaced arrangement of the at least two bearings 7a, 7b is achieved if each of the two bearings is positioned at extreme radial ends inside the firs blade section 3. However, this option is not restrictive and the distance between the bearings 7a, 7b can be less than maximum possible distance as long as the effect of enhancing the support properties of the support structure is achieved.

In the above discussed embodiment, three blades 20 are shown. However, it is clear that the number of blades 20 is not restricted to three blades. Rather, two blades or more than three blades can be arranged with the same advantageous effect of the present subject matter. Even a single blade 20 can be employed wherein care must be taken that a counterbalance weight is provided. The first blade section 3 is shown as separate member which is mounted to the support base 12 of the hub 2. However, it is possible to provide the hub 2 with the first blade section 3 as single piece e.g. based on casting or the like. In this case, the dimension of the hub 2 including the first blade section 3 is increased. However, the reduction of the length of the second blade section 4 is still preferable in order to reduce the restrictions regarding transportation.

The length of the first blade section 3 in the radial direction of the wind turbine rotor is a fraction of the length of the second blade section 4 in the radial direction of the wind turbine rotor, as stated above. In the present embodiment, the advantageous effects of this arrangement remarkable in case that the length of the first blade section 3 is 5-50 % of the length of the second blade section 4 in the radial direction of the wind turbine rotor. That is, even a very short first blade section 3 provides an improved support structure and reduces the length of the second blade section 4 to a specific extent. On the other hand, the length of the first blade section 3 which is very large and ranges up to 50 % of the length of the second blade section 4 provides an optimized operation, an enhanced safety while the transportation restrictions are dramatically reduced.

The blade 20 according to the present embodiment comprises the first blade section 3 and the second blade section 4. Consequently, the blade 20 in this embodiment is formed by two sections. However, it is possible that the blade 20 comprises the first blade section 3 which is stationary with respect to the hub 2 and the second blade section 4 which is rotatable with respect to the hub 2 in the longitudinal direction of the blade 20 and, in addition one or more further blade sections which are stationary or rotatable. It is only essential for the subject matter that the blade 20 comprises at least the first blade section 3 and the second blade section 4 with the above discussed arrangements and effect without excluding the provision of further sections between the first blade section 3 and the second blade section 4 or at other positions of the blade 20.

The subject matter is not restricted to the shown and explained embodiment as long as a wind turbine rotor is provided which includes a first blade section 3 which is fixedly mounted to the hub 2 and a second blade section 4 which is arranged radially outside with respect to the first blade section 3 and rotatably supported on the first blade section 3 or at least on the hub 2 with respect to the longitudinal axis of the blade 20 which comprises the first blade section 3 and the second blade section 4 and in which the second blade section 4 is supported by the first blade section 3 by at least two bearings 7a, 7b which are spaced with respect to the longitudinal axis of the blade 20.

## Claims

1. A wind turbine rotor comprising:
a hub (2), and;
at least one blade (20) supported by said hub (2),
wherein said blade (20) comprises a first blade section (3) and a second blade section (4), said first blade section (3) being mounted to said hub (2) stationary with respect to said hub (2), said second blade section (4) being supported by said first blade section (3) rotatably adjustable about a longitudinal axis of said blade (20), wherein said second blade section (4) is supported by the first blade section (3) by at least two bearings (7a, 7b) which are spaced with respect the longitudinal axis of said blade (20).

2. The wind turbine rotor according to claim 1,
wherein said first blade section (3) extends substantially in the radial direction of said wind turbine rotor and said second blade section (4) forms an extension at the radial end of said first blade section (3) and extends substantially in the radial direction of said wind turbine rotor.

3. The wind turbine rotor according to at least one of claims 1 and 2,
wherein said first blade section (3) forms a cover and/or mount for a support structure (6a, 6b, 7a, 7b, 8) rotatably supporting said second blade section (4).

4. The wind turbine rotor according to claim 3,
wherein said support structure (6a, 6b, 7a, 7b, 8) comprises a shaft (8) mounted to a radial inner end of said second blade section (4) and said at least two bearings (7a, 7b) rotatably supporting said shaft (8).

5. The wind turbine rotor according to claim 4,
wherein each of said at least two bearing (7a, 7b) is mounted in a bearing mount (6a, 6b).

6. The wind turbine rotor according to at least one of the preceding claims,
wherein one of said at least two bearings (7a, 7b) is arranged at or close to the radially outer end of the first blade section (3) and the other of said at least two bearings (7a, 7b) is arranged at or close to the radially inner end of the first blade section (3).

7. The wind turbine rotor according to at least one of claims 5 and 6,
wherein each of said bearing mounts (6a, 6b) is formed as plate member with its surface being arranged substantially perpendicular with respect to the radial direction of said wind turbine rotor, wherein each of said bearing mounts (6a, 6b) is provided with at least one manhole (13a, 13b) for maintenance and/or for installation works.

8. The wind turbine rotor according to at least one of claims 3 - 7,
wherein said first blade section (3) is formed as hollow member which is fixedly connected to said hub (2) and encloses said support structure (6a, 6b, 7a, 7b, 8) inside said hollow member such that said support structure (6a, 6b, 7a, 7b, 8) is arranged outside said hub (2).

9. The wind turbine rotor according to at least one of the preceding claims,
wherein an actuating device (10) is provided at least partly in said first blade section (3) which is configured to rotate said second blade section (4) about the longitudinal axis of said blade (20).

10. The wind turbine rotor according to claim 9,
wherein said actuating device (10) is formed as at least one electric motor (10) which is capable of rotating said shaft (8).

11. The wind turbine rotor according to claim 10,
wherein said at least one motor (10) is provided with a drive gear which is engaged or engagable with a gear section (11) provided on said shaft (8).

12. The wind turbine rotor according to claim 10,
wherein said at least one motor (10) is directly coupled to said shaft (8) forming a direct drive of said shaft (8) without speed reduction between the motor (10) and said shaft (8).

13. The wind turbine rotor according to at least one of claims 10 - 12,
wherein said at least one electric motor (10) is formed as synchronous motor which is controllable by a frequency converter.

14. The wind turbine rotor according to at least one of the preceding claims,
wherein said second blade section (4) is rotatably adjustable to an operational pitch position between a maximum pitch position and minimum pitch position.

15. The wind turbine rotor according to claim 14,
wherein the outer surface of said first blade section (3) is formed with an aerodynamic shape arranged for applying a torque to said hub (2) when a wind force is exerted to the first blade section (3) from the axial direction of said wind turbine rotor, and the outer surface of said second blade section (4) is formed with an aerodynamic shape arranged for applying a torque to said hub (2) via said first blade section (3) when a wind force is exerted to the second blade section (4) in the axial direction of said wind turbine rotor and the second blade section (4) is rotatably adjusted to an operational pitch position.

16. The wind turbine rotor according to at least one of the preceding claims,
wherein the outer surface of said blade (20) which is formed by the outer surface of said first blade section (3) and the outer surface of said second blade section (4) forms a continuous surface at least in a predetermined pitch position of said second blade section (4).

17. The wind turbine rotor according to at least one of claims 14 - 16,
wherein the torque applied to said hub (2) by said blade (20) is minimized by adjusting the pitch position of said second blade section (4) to the maximum pitch position.

18. The wind turbine rotor according to at least one of the preceding claims,
wherein at least one support base (12) is provided at an outer periphery of said hub (2) for supporting said first blade section (3), wherein said support base (12) comprises a mounting surface (14) which faces at least partly to the radial outward direction and which is tangential to at least a part of the outer periphery of said hub (2) or parallel to a tangent of the outer periphery of said hub (2).

19. The wind turbine rotor according to claim 18,
wherein the mounting surface (14) of said support base (12) is arranged with an outer contour which is adapted to an outer contour of said first blade section (3) at the transition between said support base (12) and the first blade section (3).

20. The wind turbine rotor according to at least one of the preceding claims,
wherein the length of said first blade section (3) in the radial direction of said wind turbine rotor is a fraction of the length of the second blade section (4) in the radial direction of said wind turbine rotor, preferably 5-50 %, more preferably 5-25 % and most preferably 10-25 % of the length of said second blade section (4).

21. A wind turbine comprising a housing, a generator accommodated in said housing and a wind turbine rotor according to at least one of the preceding claims, wherein the hub (2) of said wind turbine rotor is drivingly connected to said generator.

## Patentansprüche

1. Windturbinenrotor, umfassend:
eine Nabe (2) und
wenigstens ein Blatt (20), das durch die Nabe (2) abgestützt ist,
wobei das Blatt (20) einen ersten Blattabschnitt (3) und einen zweiten Blattabschnitt (4) aufweist, wobei der erste Blattabschnitt (3) an der Nabe (2) ortsfest in Bezug auf die Nabe (2) befestigt ist, wobei der zweite Blattabschnitt (4) durch den ersten Blattabschnitt (3) so abgestützt ist, dass er um eine Längsachse des Blatts (20) drehbar verstellt werden kann, wobei der zweite Blattabschnitt (4) durch den ersten Blattabschnitt (3) über wenigstens zwei Lager (7a, 7b) abgestützt ist, die in Bezug auf die Längsachse des Blatts (20) beabstandet sind.

2. Windturbinenrotor nach Anspruch 1,
wobei der erste Blattabschnitt (3) sich im Wesentlichen in der radialen Richtung des Windturbinenrotors erstreckt und der zweite Blattabschnitt (4) eine Verlängerung an dem radialen Ende des ersten Blattabschnitts (3) bildet und sich im Wesentlichen in der radialen Richtung des Windturbinenrotors erstreckt.

3. Windturbinenrotor nach wenigstens einem der Ansprüche 1 und 2,
wobei der erste Blattabschnitt (3) eine Abdeckung und/oder Halterung für eine Stützstruktur (6a, 6b, 7a, 7b, 8) bildet, welche den zweiten Blattabschnitt (4) drehbar abstützt.

4. Windturbinenrotor nach Anspruch 3,
wobei die Stützstruktur (6a, 6b, 7a, 7b, 8) eine Welle (8) aufweist, die an einem radial inneren Ende des zweiten Blattabschnitts (4) befestigt ist, und wobei die wenigstens zwei Lager (7a, 7b) die Welle (8) drehbar abstützen.

5. Windturbinenrotor nach Anspruch 4,
wobei jedes der wenigstens zwei Lager (7a, 7b) in einer Lagerhalterung (6a, 6b) montiert ist.

6. Windturbinenrotor nach wenigstens einem der vorhergehenden Ansprüche,
wobei eines der wenigstens zwei Lager (7a, 7b) an oder nahe dem radial äußeren Ende des ersten Blattabschnitts (3) angeordnet ist und das andere der wenigstens zwei Lager (7a, 7b) an oder nahe dem radial inneren Ende des ersten Blattabschnitts (3) angeordnet ist.

7. Windturbinenrotor nach wenigstens einem der Ansprüche 5 und 6,
wobei jede der Lagerhalterungen (6a, 6b) als Plattenelement ausgebildet ist, dessen Oberfläche im Wesentlichen rechtwinklig in Bezug auf die radiale Richtung des Windturbinenrotors angeordnet ist, wobei jede der Lagerhalterungen (6a, 6b) mit wenigstens einem Mannloch (13a, 13b) für Wartungs- und/oder Installationsarbeiten versehen ist.

8. Windturbinenrotor nach wenigstens einem der Ansprüche 3 bis 7,
wobei der erste Blattabschnitt (3) als ein Hohlelement ausgebildet ist, das fest mit der Nabe (2) verbunden ist und die Stützstruktur (6a, 6b, 7a, 7b, 8) in dem Hohlelement auf eine solche Weise umschließt, dass die Stützstruktur (6a, 6b, 7a, 7b, 8) außerhalb der Nabe (2) angeordnet ist.

9. Windturbinenrotor nach wenigstens einem der vorhergehenden Ansprüche,
wobei eine Betätigungseinrichtung (10) wenigstens teilweise in dem ersten Blattabschnitt (3) vorgesehen ist, die so ausgelegt ist, dass sie den zweiten Blattabschnitt (4) um die Längsachse des Blatts (20) dreht.

10. Windturbinenrotor nach Anspruch 9,
wobei die Betätigungseinrichtung (10) als wenigstens ein Elektromotor (10) ausgebildet ist, der in der Lage ist, die Welle (8) zu drehen.

11. Windturbinenrotor nach Anspruch 10,
wobei der wenigstens eine Motor (10) mit einem Getriebe versehen ist, das in Eingriff mit einem an der Welle (8) vorgesehenen Getriebeabschnitt (11) steht oder mit diesem in Eingriff gebracht werden kann.

12. Windturbinenrotor nach Anspruch 10,
wobei der wenigstens eine Motor (10) direkt an die Welle (8) gekoppelt ist und einen direkten Antrieb für die Welle (8) bildet, ohne dass zwischen dem Motor (10) und der Welle (8) eine Geschwindigkeitsabnahme erfolgt.

13. Windturbinenrotor nach wenigstens einem der Ansprüche 10 bis 12,
wobei der wenigstens eine Elektromotor (10) als ein Synchronmotor ausgebildet ist, der über einen Frequenzumrichter gesteuert werden kann.

14. Windturbinenrotor nach wenigstens einem der vorhergehenden Ansprüche,
wobei der zweite Blattabschnitt (4) drehbar auf eine betriebliche Neigungsstellung zwischen einer maximalen Neigungsstellung und einer minimalen Neigungsstellung eingestellt werden kann.

15. Windturbinenrotor nach Anspruch 14,
wobei die Mantelfläche des ersten Blattabschnitts (3) mit einer aerodynamischen Form ausgebildet ist, die so angeordnet ist, dass die Nabe (2) mit einem Drehmoment beaufschlagt wird, wenn eine Windkraft auf den ersten Blattabschnitt (3) aus der axialen Richtung des Windturbinenrotors ausgeübt wird, und wobei die Mantelfläche des zweiten Blattabschnitts (4) mit einer aerodynamischen Form ausgebildet ist, die so angeordnet ist, dass die Nabe (2) über den ersten Blattabschnitt (3) mit einem Drehmoment beaufschlagt wird, wenn eine Windkraft auf den zweiten Blattabschnitt (4) in der axialen Richtung des Windturbinenrotors ausgeübt wird und der zweite Blattabschnitt (4) drehbar auf eine betriebliche Neigungsstellung eingestellt ist.

16. Windturbinenrotor nach wenigstens einem der vorhergehenden Ansprüche,
wobei die Mantelfläche des Blatts (20), die durch die Mantelfläche des ersten Blattabschnitts (3) und die Mantelfläche des zweiten Blattabschnitts (4) gebildet ist, eine durchgehende Oberfläche wenigstens in einer vorbestimmten Neigungsstellung des zweiten Blattabschnitts (4) bildet.

17. Windturbinenrotor nach wenigstens einem der Ansprüche 14 bis 16,
wobei das auf die Nabe (2) durch das Blatt (20) ausgeübte Drehmoment durch Einstellen der Neigungsstellung des zweiten Blattabschnitts (4) auf die maximale Neigungsstellung minimiert wird.

18. Windturbinenrotor nach wenigstens einem der vorhergehenden Ansprüche,
wobei wenigstens eine Stützbasis (12) an einem Außenumfang der Nabe (2) vorgesehen ist, um den ersten Blattabschnitt (3) zu tragen, wobei die Stützbasis (12) eine Montagefläche (14) umfasst, die wenigstens teilweise in die radial nach außen verlaufende Richtung weist und die zu wenigstens einem Teil des Außenumfangs der Nabe (2) tangential oder parallel zu einer Tangente des Außenumfangs der Nabe (2) angeordnet ist.

19. Windturbinenrotor nach Anspruch 18,
wobei die Montagefläche (14) der Stützbasis (12) mit einer Außenkontur ausgestaltet ist, die an dem Übergang zwischen der Stützbasis (12) und dem ersten Blattabschnitt (3) an eine Außenkontur des ersten Blattabschnitts (3) angepasst ist.

20. Windturbinenrotor nach wenigstens einem der vorhergehenden Ansprüche,
wobei die Länge des ersten Blattabschnitts (3) in der radialen Richtung des Windturbinenrotors eine Bruchzahl der Länge des zweiten Blattabschnitts (4) in der radialen Richtung des Windturbinenrotors ist, vorzugsweise 5 bis 50 %, insbesondere 5 bis 25 % und besonders bevorzugt 10 bis 25 % der Länge des zweiten Blattabschnitts (4).

21. Windturbine, die ein Gehäuse, einen in dem Gehäuse untergebrachten Generator und einen Windturbinenrotor nach wenigstens einem der vorhergehenden Ansprüche aufweist, wobei die Nabe (2) des Windturbinenrotors auf antreibende Weise mit dem Generator verbunden ist.

## Revendications

1. Rotor d'éolienne comprenant :
un moyeu (2), et ;
au moins une pale (20) supportée par ledit moyeu (2),
dans lequel ladite pale (20) comprend une première section de pale (3) et une deuxième section de pale (4),
ladite première section de pale (3) étant montée sur ledit moyeu (2), de manière fixe par rapport audit moyeu (2), ladite deuxième section de pale (4) étant supportée par ladite première section de pale (3), de manière ajustable en rotation autour d'un axe longitudinal de ladite pale (20), ladite deuxième section de pale (4) étant supportée par la première section de pale (3) par au moins deux paliers (7a, 7b) qui sont espacés par rapport à l'axe longitudinal de ladite pale (20).

2. Rotor d'éolienne selon la revendication 1,
dans lequel ladite première section de pale (3) s'étend essentiellement dans la direction radiale dudit rotor d'éolienne et ladite deuxième section de pale (4) forme une extension à l'extrémité radiale de ladite première section de pale (3) et s'étend essentiellement dans la direction radiale dudit rotor d'éolienne.

3. Rotor d'éolienne selon au moins l'une des revendications 1 et 2,
dans lequel ladite première section de pale (3) forme un couvercle et/ou une monture pour une structure de support (6a, 6b, 7a, 7b, 8) supportant ladite deuxième section de pale (4) en rotation.

4. Rotor d'éolienne selon la revendication 3,
dans lequel ladite structure de support (6a, 6b, 7a, 7b, 8) comprend un arbre (8) monté sur une extrémité interne radiale de ladite deuxième section de pale (4) et lesdits au moins deux paliers (7a, 7b) supportant ledit arbre (8) en rotation.

5. Rotor d'éolienne selon la revendication 4,
dans lequel chacun desdits au moins deux paliers (7a, 7b) est monté dans un logement de palier (6a, 6b).

6. Rotor d'éolienne selon au moins l'une des revendications précédentes,
dans lequel l'un desdits au moins deux paliers (7a, 7b) est disposé au niveau ou à proximité de l'extrémité radialement externe de la première section de pale (3) et l'autre desdits au moins deux paliers (7a, 7b) est disposé au niveau ou à proximité de l'extrémité radialement interne de la première section de pale (3).

7. Rotor d'éolienne selon au moins l'une des revendications 5 et 6,
dans lequel chacun desdits logements de palier (6a, 6b) se présente sous la forme d'un élément de plaque ayant sa surface disposée essentiellement perpendiculairement par rapport à la direction radiale dudit rotor d'éolienne, chacun desdits logements de palier (6a, 6b) étant pourvu d'au moins un trou d'homme (13a, 13b) pour les travaux d'entretien et/ou d'installation.

8. Rotor d'éolienne selon au moins l'une des revendications 3 à 7,
dans lequel ladite première section de pale (3) se présente sous la forme d'un élément creux qui est raccordé fixement audit moyeu (2) et qui renferme ladite structure de support (6a, 6b, 7a, 7b, 8) à l'intérieur dudit élément creux de telle sorte que ladite structure de support (6a, 6b, 7a, 7b, 8) soit disposée à l'extérieur dudit moyeu (2).

9. Rotor d'éolienne selon au moins l'une des revendications précédentes,
dans lequel un dispositif d'actionnement (10) est prévu au moins partiellement dans ladite première section de pale (3), qui est configurée pour faire tourner ladite section de pale (4) autour de l'axe longitudinal de ladite pale (20).

10. Rotor d'éolienne selon la revendication 9,
dans lequel ledit dispositif d'actionnement (10) se présente sous la forme d'au moins un moteur électrique (10) qui est capable de faire tourner ledit arbre (8).

11. Rotor d'éolienne selon la revendication 10,
dans lequel ledit au moins un moteur (10) est pourvu d'un pignon d'entraînement qui est engrené ou apte à être engrené avec une section d'engrenage (11) prévue sur ledit arbre (8).

12. Rotor d'éolienne selon la revendication 10,
dans lequel ledit au moins un moteur (10) est directement couplé audit arbre (8), formant un entraînement direct dudit arbre (8) sans réduction de vitesse entre le moteur (10) et ledit arbre (8).

13. Rotor d'éolienne selon au moins l'une des revendications 10 à 12,
dans lequel ledit au moins un moteur électrique (10) se présente sous la forme d'un moteur synchrone qui est peut être commandé par un convertisseur de fréquence.

14. Rotor d'éolienne selon au moins l'une des revendications précédentes,
dans lequel ladite deuxième section de pale (4) est ajustable en rotation à une position de pas de service entre une position de pas maximale et une position de pas minimale.

15. Rotor d'éolienne selon la revendication 14,
dans lequel la surface externe de ladite première section de pale (3) est dotée d'une forme aérodynamique conçue pour appliquer un couple sur ledit moyeu (2) lorsqu'une force du vent est exercée sur ladite première section de pale (3) depuis la direction axiale dudit rotor d'éolienne, et la surface externe de la deuxième section de pale (4) est dotée d'une forme aérodynamique conçue pour appliquer un couple sur ledit moyeu (2), via ladite première section de pale (3), lorsqu'une force de vent est exercée sur la deuxième section de pale (4) dans la direction axiale dudit rotor d'éolienne et que la deuxième section de pale (4) est ajustée en rotation à une position de pas de service.

16. Rotor d'éolienne selon au moins l'une des revendications précédentes,
dans lequel la surface externe de ladite pale (20) qui est formée par la surface externe de ladite première section de pale (3) et la surface externe de ladite deuxième section de pale (4) forme une surface continue au moins dans une position de pas prédéterminée de ladite deuxième section de pale (4).

17. Rotor d'éolienne selon au moins l'une des revendications 14 à 16,
dans lequel le couple appliqué sur ledit moyeu (2) par ladite pale (20) est minimisé par ajustement de la position de pas de ladite deuxième section de pale (4) à la position de pas maximale.

18. Rotor d'éolienne selon au moins l'une des revendications précédentes,
dans lequel au moins une base de support (12) est prévue au niveau d'une périphérie externe dudit moyeu (2) pour supporter ladite première section de pale (3), ladite base de support (12) comprenant une surface de montage (14) qui fait face au moins partiellement à la direction externe radiale et qui est tangentielle à au moins une partie de la périphérie externe dudit moyeu (2) ou parallèle à une tangente de la périphérie externe dudit moyeu (2).

19. Rotor d'éolienne selon la revendication 18,
dans lequel la surface de montage (14) de ladite base de support (12) est agencée avec un contour externe qui est adapté à un contour externe de ladite première section de pale (3) au niveau de la transition entre ladite base de support (12) et ladite première section de pale (3).

20. Rotor d'éolienne selon au moins l'une des revendications précédentes,
dans lequel la longueur de ladite première section de pale (3) dans la direction radiale dudit rotor d'éolienne est une fraction de la longueur de la deuxième section de pale (4) dans la direction radiale dudit rotor d'éolienne, préférablement de 5 à 50 %, plus préférablement de 5 à 25 %, et le plus préférablement de 10 à 25 % de la longueur de ladite deuxième section de pale (4).

21. Eolienne comprenant un carter, un générateur logé
dans ledit carter et un rotor d'éolienne selon au moins l'une des revendications précédentes, dans laquelle le moyeu (2) dudit rotor d'éolienne est connecté en liaison d'entraînement audit générateur.
